# EUROPEAN PATENT SPECIFICATION

(11) **EP 2 621 032 B1**
(45) Date of publication and mention of the grant of the patent: **24.03.2021**
(21) Application number: 13152039.7
(22) Date of filing: 21.01.2013
(51) Int. Cl.: H01S 3/00, G02F 1/35, H01S 3/067

(54) **Method and device for sum-frequency generation of light pulses**
Verfahren und Vorrichtung zur Summenfrequenzerzeugung von Lichtpulsen
Procédé et équipement pour la génération de fréquence de somme d'impulsions de lumière

(30) Priority: 27.01.2012 LT 2012008
(43) Date of publication of application: 31.07.2013
(73) Proprietor: Valstybinis moksliniu tyrimu institutas Fiziniu ir technologijos mokslu centras, 02300 Vilnius (LT)
(72) Inventor: Regelskis, Kestutis, 05129 Vilnius (LT); Zeludevicius, Julijanas, 01213 Vilnius (LT); Raciukaitis, Gediminas, 06226 Vilnius (LT)
(74) Representative: Draugeliene, Virgina Adolfina

(56) References cited:
- EP-A1- 2 101 161
- WO-A1-2009/132375
- GB-A- 2 182 197
- JP-A- H04 121 718

## Description

This invention relates to the field of laser technology and more particularly concerns sum-frequency generation method, where pulses are combined by adding their optical frequencies in second-order nonlinear medium. By using proposed method the combined sum-frequency pulses with almost twice higher energy, than using traditional sum-frequency or second harmonic generation schemes, can be achieved. This method also lets to make twice shorter duration sum-frequency pulses than initial light pulses and trains of short light pulses.

There is known sum-frequency method and device based on resonant optical frequency doubling, when laser beam of fundamental frequency is directed to resonator with a nonlinear crystal. Laser radiation is matched with resonant mode, cavity length is precisely controlled. Resonant enhancement of laser radiation makes possible efficient optical frequency doubling in the nonlinear crystal.
The said method and device is described in these articles: Thomas Sudmeyer, Yutaka Imai, Hisashi Masuda, Naoya Eguchi, Masaki Saito, and Shigeo Kubota, "Efficient 2nd and 4th harmonic generation of a single-frequency, continuous-wave fiber amplifier," Opt. Express 16, 1546-1551 (2008); Jae-Ihn Kim and Dieter Meschede, "Continuous-wave coherent ultraviolet source at 326 nm based on frequency trippling of fiber amplifiers," Opt. Express 16, 10803-10808 (2008).
Disadvantage of the said method and device is that resonant frequency doubling of laser radiation can be applied only for single optical frequency laser radiation or in individual cases for optical frequency doubling of continuous pulse train from a mode-locked laser. For all other cases, this method cannot be applied.
Furthermore, in this method for optical frequency doubling of laser radiation, the resonator impedance has to be matched. Transmission coefficient of resonator entrance mirror has to be equal to all resonator losses, including losses related to nonlinear frequency doubling.
Moreover, in this method for optical frequency doubling of laser radiation, resonator length has to be matched with sub-wavelength accuracy using special electronic feedback circuit, which accurately controls resonator length.

Moreover, in this method for optical frequency doubling of laser radiation, laser beam have to be matched with resonant mode of resonator, therefore laser radiation has to be diffraction-limited.

The closest technical method is the well-known sum-frequency generation method and device, for traditional optical frequency doubling, where laser radiation is directed and focused to the second-order nonlinear crystal by a focusing device. Because of nonlinear interaction and satisfying phase-matching conditions, optical frequency of laser radiation is doubled -second harmonic is generated.

The said method and device is described in article P. D. Maker et al., "Effects of dispersion and focusing on the production of optical harmonics", Phys. Rev. Lett. 8 (1), 21 (1962). Second harmonics generation takes places when phase-matching conditions are satisfied.

Disadvantage of the said method and device is that peak power of the pulse at the sum-frequency is smaller than peak power of the initial laser pulse, because optical frequency doubling efficiency is always smaller than 100%, except for some individual cases when generated sum-frequency pulses are compressed because of group velocity mismatch of initial ultra short pulses.

Moreover, using this method for optical frequency doubling of laser pulses, it is impossible to combine sequential pulses and generate sum-frequency pulses with the same energy but twice shorter pulse duration. Also, using this method, it is impossible to combine double pulses - pairs of pulses and generate single sum-frequency pulses.

Furthermore, in this method of laser pulse frequency doubling, the peak power of a pulse has to be high, in order to get high optical frequency doubling efficiency EP2101161 A1 discloses a splitting and combination of parts of subsequent pulses from a pulse train for sum-frequency generation in a non-linear medium for CEP stabilisation but due to the collinear arrangement D1 does not disclose a first trip through the non-linear medium without conversion. JP-H04 121718 A discloses a ring-type arrangement for alternating passes through a non-linear medium for frequency conversion with only every second pass resulting in phase-matched conversion but no details on the pulse length are disclosed and neither a first pass through the medium without conversion. GB 2182197 A discloses the possibility in case of type II phase matching to control the generation of phase-matched frequency conversion with an intra-cavity Pockels cell.

The invention is defined by a methods for sum-frequency generation of light pulses according to the technical features disclosed in claim 1 and claim 2 and by a devices for sum-frequency generation of light pulses according to the technical features disclosed in claim 5 and claim 6. Preferred embodiments of this invention are given in the depended

### Advantages of the invention.

Using proposed method sequential light pulses are combined in time by summing their optical frequencies in the second-order nonlinear medium and generating two times shorter sum-frequency pulses with a twice large peak power than can be achieved using conventional schemes for optical harmonics and sum-frequency generation.
Moreover, this method is suitable for combining laser pulses amplified in fiber amplifiers. Advantage of this method is that the pulse peak power is limited by different nonlinear processes taking place in a fiber: self-phase modulation, stimulated Raman and Brillouin scattering, four-wave mixing, self-focusing and other. Due to this reason, the two times longer light pulses in most cases can be amplified in optical fiber to the twice higher energy and after sequential combining of amplified pulses by summing frequencies in nonlinear second-order medium, it is possible to generate the same energy, but with twice shorter duration of the sum-frequency pulses.
Also by using this method it is possible to amplify two sequential pulses, pairs of pulses, in a fiber amplifier and after sequential combining, by summing their optical frequencies in a nonlinear second-order medium, the sum-frequency pulses with double peak power can be achieved.

Moreover, in this method of sequential combining of pulses by sum-frequency generation in the second-order nonlinear medium, the nonlinear interaction is stronger and the sum-frequency conversion efficiency is higher, than using conventional second harmonic generation schemes, because the initial light pulses overlap with themselves in a nonlinear second-order medium thus two times higher peak power is achieved comparing with peak power of the initial pulse and, accordingly, the stronger nonlinear interaction takes place.
In addition, this method of sequentially combining of light pulses in time allows generating pulse series, when duration of initial light pulse is more than three times longer than duration of propagation through optical path between the first and second pass of the initial light pulse through the second-order nonlinear medium.
Moreover, advantage of the proposed device based on the invention is, that by combining a light pulse propagating for the first time through the nonlinear medium with the light pulse propagating for the second time through the nonlinear medium, the twice shorter sum-frequency light pulses are generated. As a result, there is no need to compress pulse separately, which is not always possible. For example, when the original pulse is spectrally-limited, it cannot be compressed unless it was temporally stretched before generation of the second harmonics.

Moreover, there is advantage of application of this device/method together with fiber amplifiers for light pulse amplification. As pulse peak power in optical fiber is limited by different nonlinear processes, it is possible in most cases to amplify in optical fiber twice longer light pulses to twice higher energy and then, by using this device/method, sequentially combine the amplified pulses in time, summing optical frequencies in a nonlinear second-order medium and generating the same pulse energy, but twice shorter duration and respectively the twice higher peak power of the sum-frequency pulses.

Prime cost of device based on present method of sequential combining of light pulses in time domain is equal to prime cost of conventional second harmonic or sum-frequency generation devices. Device based on the present method of sequential combining of light pulses in time domain is more flexible for usage in different applications, because not only sum-frequency generation is possible but also it is possible to tune time parameters of generated pulses.
Moreover, prime cost of a device based on the present method of sequential combining of light pulses in time domain, used for generation of sequences of sum-frequency pulses, is smaller than prime cost of analogous device of same functionality.

Descriptions of the drawings are presented for further explanation of invention.
Fig.1 - is a block scheme of the proposed device, in which light pulses propagating through a second-order nonlinear medium for the first and second time intersect by an angle.
Fig.2 - is a block scheme of the proposed device, which is similar to Fig.1 but instead of paths of light pulses, light waves are presented.
Fig.3 - is a block scheme of the proposed device, in which light pulses propagating through a second-order nonlinear medium for the first and second time overlap collinearly.
Fig.4 - is a block scheme of the proposed device, in which the first light pulse of the pair in a second-order nonlinear medium, propagates through and goes back the same path in a second-order nonlinear medium.
Fig.5 - is a block scheme of the proposed device, in which the first light pulse of the pair after propagation through a second-order nonlinear medium returns back through the optical fiber to the same second-order nonlinear medium. Then, light pulses propagating through a second-order nonlinear medium for the first and second time intersect at an angle.
Fig.6 - is a block scheme of the proposed device, in which the first light pulse of the pair after propagating though the second-order nonlinear medium is returned back to the said second-order nonlinear medium, by mirrors formed on the input and output sides of the second-order nonlinear medium.
Fig.7 - time diagrams of propagating light pulses, including parts 1', 1, and propagating second part 1' and returned first part 1 are sequentially combined to the sum-frequency light pulse 4.
Fig.8 - logical value chart of the propagating pairs of light pulses 1, 1', sequentially combined sum-frequency light pulses 4 and not combined light pulses 4' at the device output, , light pulses of the pair are separated by time interval T, **I** means there is pulse, **O** means there is no pulse.
Fig.9 - experimentally measured energy of the sequentially combined light pulses by the sum-frequency generation, versus the initial energy of light pulse pairs after amplification in a fiber amplifier. For comparison, the single pulse second harmonics energy, achievable using conventional second harmonics generation scheme, versus the initial pulse energy, is provided.
Fig.10 - experimentally measured temporal characteristic of light pulse pairs and the combined light pulse pairs by generating of sum-frequencies.
Fig.11 - is an application example of the proposed device, intended for generation of high energy sum-frequency pulses.
Fig. 12 - is an application example of the proposed device according to Fig.1.

Proposed sum-frequency pulse generation method comprises the following sequence of operations.
Pairs of light pulses, or in other case single pulses, are directed to a second-order nonlinear medium. In the first case, the first light pulse of the every pair propagating through the second-order nonlinear medium for the first time does not satisfy the phase-matching conditions, thus second harmonic is not being generated. The first light pulse of the pair is then directed back to the input side of the second-order nonlinear medium, so that the first light pulse, propagating for the second time through the second-order medium, overlaps with the second pulse of the same pair, which propagates through the second-order nonlinear medium for the first time. As phase-matching conditions are satisfied, efficient nonlinear interaction takes place and overlapping pulses are combined to the sum-frequency light pulses. Time interval between adjacent pulses of a pair is equal to time duration T, needed light propagate starting from the nonlinear medium input side, first light pulse passes through the second-order nonlinear medium, is reflected back and propagates back to the input side of the second-order nonlinear medium.

In the second embodiment of proposed invention, the first part of the single pulse propagates for the second time through the second-order medium and overlaps with the second part of the same pulse, which propagates through the second-order nonlinear medium for the first time. As the phase-matching conditions are satisfied, the efficient nonlinear interaction takes place and overlapping parts of the same pulse are combined to the sum-frequency light pulse. In this case, duration of a single light pulse is longer than time T, needed the first part of the light pulse to propagate through the second-order nonlinear medium starting from the nonlinear medium input side, be reflected back and propagate back to the second-order nonlinear medium input side. There are possible several light pulses combining techniques of the suggested invention. One of the combining techniques is that the returned back first pulse of the pair or, in the second case, the returned back first part of the same light pulse in the second-order nonlinear medium and the second pulse or second part of the same pulse, propagating through a nonlinear medium for the first time intersect in the second-order nonlinear medium at an angle. The said angle of the intersection is predetermined to satisfy the phase-matching condition for the non-collinear nonlinear interaction between light pulses or, respectively, parts of a light pulse overlapping in the second-order medium. The light pulses, or the first and second parts of the same pulse propagating through the second-order nonlinear medium for the first and second time are combined by summing their optical frequencies.

Other modification of the method for sequential combining of light pulses differs from previous method in the way that the light pulses, or, in other case, the first and second parts of the same pulse, propagating through the second-order nonlinear medium for the first and second time overlap collinearly and are perpendicularly polarized.

Other modification of method for sequential combining of light pulses differs from previous methods in the way that the first light pulse or, in other case, the first part of the same pulse propagates through the second-order nonlinear medium and is returned back through the same path in opposite direction.

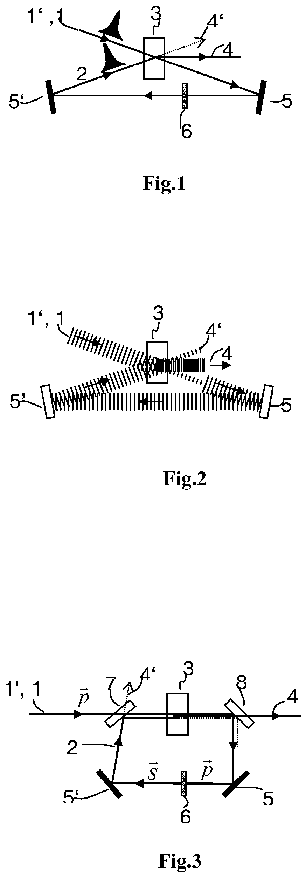

Proposed device for sum-frequency generation of light pulses, in which light pulses 1' propagating for the first time and light pulses 2 reflected and propagating for the second time through the second-order nonlinear medium overlap with each other in the second order-nonlinear medium 3, and the sum-frequency light pulses 4 are generated from the output side of the second-order medium 3. In Fig.1 and Fig.2 is shown the second-order nonlinear medium 3 to the input side of which the light pulses (1, 1') in pairs are directed by optical scheme (in drawings not shown). The first light pulse 1 of the pair, which passed through the second-order nonlinear medium 3, is returned back by a returning optical path to the same input side of the nonlinear medium 3 as returned pulse 2. The said returning optical path includes a first and a second mirrors (5, 5') and an element 6 for light polarization rotation, which rotates polarization of light pulses from 0 to 90 degrees. The returned back pulse 2 in the second-order nonlinear medium 3 intersects at predetermined angle with a light pulse 1' propagating through nonlinear medium 3 for the first time. The angle of intersection is predetermined to satisfy the phase-matching condition for the non-collinear nonlinear interaction between propagation directions of the light pulses or respectively parts of light pulse propagating through the second-order nonlinear medium for the first and second time and overlapping in the second-order nonlinear medium 3. By satisfying the non-collinear interaction phase-matching conditions, the light pulses or respectively parts of light pulse (1', 2) are combined to the sum-frequency light pulses 4. As light pulses (1',2) propagating through the second-order nonlinear medium 3 for the first and second time intersect at predetermined angle which satisfy the non-collinear nonlinear phase-matching conditions, polarizations of the light pulses can be equal and perpendicular. This depends on the second-order nonlinear medium 3 characteristics.

In Fig.3, other modification of device for the sum-frequency generation of light pulses is depicted, which differs from previously mentioned one in the way that light pulses 1, 1' propagating for the first time through the second-order nonlinear medium 3 and light pulses 2 reflected back and propagating for the second time through the second-order nonlinear medium 3 have perpendicular polarizations. Pulses (1',2) overlap in the nonlinear medium 3 collinearly and after satisfying the collinear nonlinear phase-matching conditions, pulses are combined to the sum-frequency beams 4. Light pulses 1, 1' have ***p*** type polarization and are directed through polarization beam splitter 7 to the input side of the second-order nonlinear medium 3. The first light pulse 1 of the pulse pair 1, 1' are returned back in such order: pulse 1 after passing through the nonlinear medium 3 is reflected by a dichroic mirror 8, first and second mirrors 5, 5' and the polarization beam splitter 7 and directed to the same input side of the nonlinear medium 3. The second light pulse 1' of the same pair 1,1' propagating for the first time though the second-order nonlinear medium 3, and returned light pulse 2 overlap with each other in the second-order nonlinear medium 3. The returning optical path of light pulses has the polarization rotation element 6, such as half-wavelength plate, which rotates polarization of the returned light pulse 2 by 90 degrees so that polarization of the returned pulse 2 changes from type *p* to *s*. By satisfying the collinear nonlinear interaction phase-matching conditions, the light pulses (1', 2) propagating for the first and second time through the second-order nonlinear medium 3 are combined to the sum-frequency light pulses 4, which are separated from light pulses 4' by dichroic mirror 8.

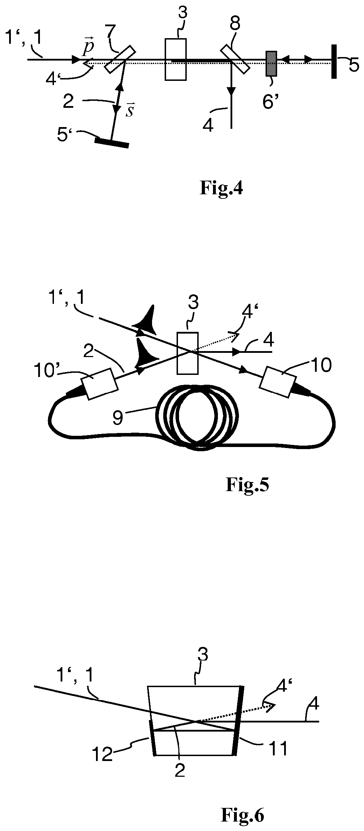

In Fig. 4, other modification of the sum-frequency generation device is pictured, in which the other sequential light beam combining in time domain method is used and which differs from the above mentioned method in the way that light pulses 1 propagate through and are returned back by the same path in the second-order nonlinear medium 3. The first light pulse 1 of the pair 1,1' propagates through the polarization beam splitter 7, the second-order nonlinear medium 3, dichroic mirror 8, polarization rotation element 6', is reflected from mirror 5 and for the second time propagates through polarization rotation element 6', dichroic mirror 8, second-order nonlinear medium 3, is reflected from polarization beam splitter 7, mirror 5' and after being reflected again from the polarization beam splitter7, as returned back light pulse 2, which is directed to the input side of the second-order medium 3. The second light pulse 1' of the pair 1,1' propagating for the first time and the returned light pulse 2 of the pair propagating though the second-order nonlinear medium 3 for the second time overlap in the second-order nonlinear medium 3 and due to the nonlinear interaction are combined to the sum-frequency pulse 4, which is separated from light pulses 4' by dichroic mirror 8. Light pulse 1, which has *p* type polarization, after passing through the polarization rotating element 6', reflecting from mirror 5, passing through the polarization rotating element 6' again changes its polarization to perpendicular - *s* type. The polarization rotating element is quarter-wavelength plate or Faraday rotator.

In Fig.5, other modification of device for the sum-frequency generation of light pulses is depicted, which uses a large time delay L, between light pulses (1', 2) propagating through the second-order nonlinear medium 3 for the first and second time. The first light pulse 1 of the pair passes the second-order nonlinear medium 3 and returns back to the input side of the mentioned nonlinear medium after propagating through a collimator 10, optical fiber 9 and collimator 10'. Length of the optical fiber is predetermined, that the returned light pulse 2 or part 2 of the returned light pulse propagating for the second time through the second-order nonlinear medium 3 overlap with the second light pulse 1' of the pair or second part 1' of the same light pulse, respectively, propagating for the first time through the second-order nonlinear medium. The length of optical fiber 9 is selected to ensure the overlapping and intersecting at a predetermined angle of the second light pulse 1' of the pair or of the second part 1' of the pulse, propagating for the first time through the second-order nonlinear medium 3, with the returned light pulse 2 or returning part 2 of the light pulse, where the said angle of intersection is predetermined to satisfy the phase-matching conditions for the non-collinear nonlinear interaction in the second-order nonlinear medium 3 between overlapping light pulses or parts of the same light pulse respectively Optical fiber is not longer than L/n_{eff}. Here n_{eff} is effective refraction index of the mode propagating in the optical fiber 9. For example, if delay is equal to L=100 meters, the length of the optical fiber 9 is smaller than 100/1,45 meters.

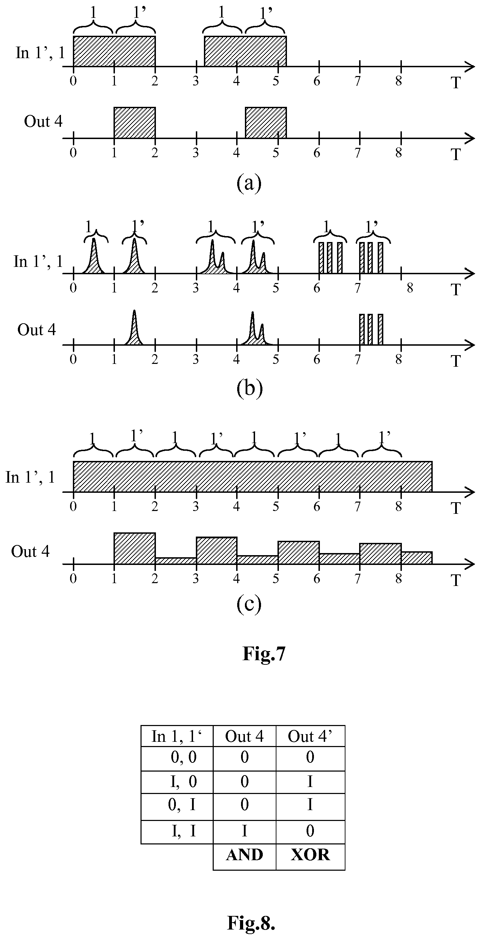

In Fig.6, other modification of the sum-frequency generation device is presented, which differs from the previously mentioned methods in the way that the second-order nonlinear medium 3 is shaped like an isosceles trapezoid. On the output and input sides of the trapezoid shaped nonlinear medium 3, the reflection mirrors 11 and 12, respectively, are formed, so that the first light pulse 1 propagating for the first time through the second-order nonlinear medium 3 is reflected from the mirror 11, formed on output side of the trapezoid shaped nonlinear medium 3 and propagates back through the nonlinear medium 3 and is reflected from the second mirror 12, formed on the input side of the trapezoid shaped nonlinear medium 3. Reflected from the mirror 12 and returned back as the returned light pulse 2 or returned part 2 of the light pulse intersects at predetermined angle with second light pulse 1' of the pair or with second part 1' of the same pulse propagating for the first time through the second-order nonlinear medium 3. The said intersection angle is predetermined to satisfy the phase-matching conditions for the non-collinear nonlinear interaction between light pulses or respectively parts of light pulses overlapping in the second-order nonlinear medium.
Examples of time diagrams of light pulses 1, 1' and sequentially combined light pulses 4 are presented in Fig.7. In the diagrams, symbol T represents time duration, in which light pulse, starting from the input side of the second-order nonlinear medium 3 propagates through the mentioned nonlinear medium 3, is returned back and directed to the same input side of the second-order nonlinear medium 3 or, in other words, the distance between the light pulses (1', 2) propagating for the first and second time through the second-order nonlinear medium. If light pulses 1 at the input side of the nonlinear medium are rectangular in time and their duration is equal to 2T, the combined sum-frequency light pulses at the output side of the nonlinear medium output side are also rectangular, but are two times shorter in duration (Fig.7a). If the light pulses consist of pairs of light pulses (1, 1') and distance in time between adjacent light pulses (1, 1') is equal to T, then the combined light pulses have same profile in time but there is single pulse instead of each pair of pulses (Fig.7b). If the light pulse 1 at the device input side is single and with duration longer than 3T, then after sequential combining of the first and second parts of this pulse the sum-frequency sequence of pulses 4 is generated (Fig.7c).

In Fig.8, there is presented a logic value table of the light pulses pairs *1,1'*, the sequentially combined sum-frequency light pulses *4* and not combined light pulses *4'* at the device output side. Time interval between the adjacent light pulses in pair is T. Symbol I means that pulse is present, symbol 0 means that pulse is not present. The sequentially combined sum-frequency light pulses *4* represented as a logical result corresponding to the logical operation AND on light pulses in a pair, and the not combined light pulses *4'* correspond to the logical operation XOR on light pulses in a pair.

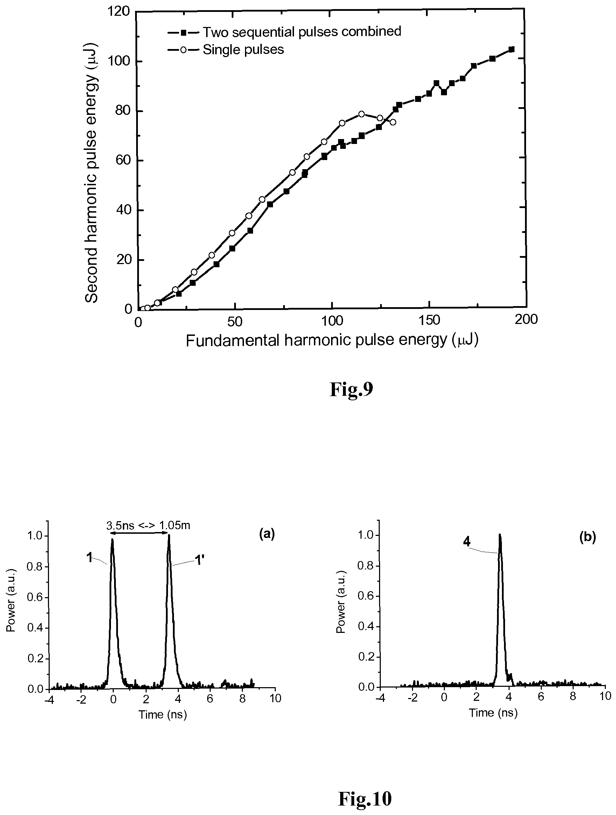

One of possible practical applications of the sequential combining of light pulses in time by the sum-frequency generation in the second-order nonlinear medium is combining of light pulses amplified in an optical fiber amplifier by generation of the second harmonics in KTP nonlinear crystal. The scheme, presented in Fig.4 was applied for sequential combining of pulses. Pairs of the light pulses 1, 1' consisted of two Gaussian pulses, the pulse duration was 430 ps (FWHM) and distance between light pulses in time was 3.5 ns. Peak power and respectively pulse energy of short, picoseconds light pulses amplified in optical fiber amplifiers is limited by various nonlinear interactions in an optical fiber. Therefore pairs of light pulses can be amplified up to two times higher energy, compared to single pulses. After combining pairs of the amplified pulses, single second harmonics pulses were generated with the energy two times higher than energy of light pulses generated using conventional second harmonics generation schemes (Fig. 9). Experimentally measured temporal characteristic of pairs of the pulses 1, 1', amplified in optical fiber amplifier is pictured in Fig.10a and temporal characteristic of the combined second harmonics pulses is pictured in Fig.10b. In experimental setup for the second harmonics generation, pairs of light pulses were sequentially combined to the sum-frequency of the single pulses.

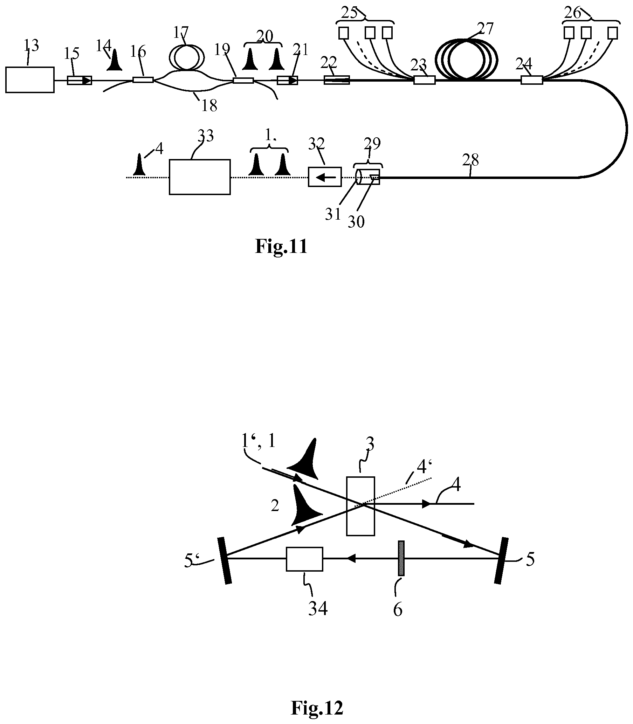

Fig.11 shows application of the proposed device in the laser system generating high-energy sum-frequency pulses. The mentioned laser system consists of a master pulsed laser 13, which generates pulse train 14, fiber isolator 15, which isolates pulsed laser 13 from returning back radiation, fiber beam splitter 16, for splitting of pulses 14 and directing to two fiber branches (17, 18) of a different length, fiber beam splitter 19, which combines pulses 14 propagating in fiber branches 17 and 18 of different length to the pairs of pulses 20, fiber isolator 21, which protects pulsed laser 13 from back-reflections, mode adapter 22, which couples modes between fibers with different core diameters, signal and pump couplers 23 and 24, for directing pump radiation from diode lasers 25 and 26 to large-mode-area polarization maintaining ytterbium doped double clad fiber 27, where pairs of pulses 20 are amplified to the required energy, then pairs of the amplified pulses 1, 1' are directed by the large-mode-area passive fiber 28 to collimator 29, which consists of glass rod 30 connected to the large-mode-area passive fiber 28 end and collimating lens 31. Glass rod 30 protects fiber 28 end from optical breakdown. Collimated in collimator 29 pair of light pulses 1, 1' are directed through the free-space optical isolator 32 to the device 33, made according to one of optical schemes shown in Fig.1-Fig.6, for combining of pairs of pulses 1 o parts of the same pulses to the sum-frequency pulses 4.
Fig.12 shows other modification of the sum-frequency generation device, which additionally uses electro-optic Pockels cell, for switching polarization of light pulses and in this way controlling the pulse combining process.

## Claims

1. Method for sum-frequency generation of light pulses, where light pulses are directed into a second-order nonlinear medium (3) and satisfy the phase-matching conditions, the sum-frequency generation takes place by directing light pulses to an input side of the second-order nonlinear medium (3) in pairs sequentially, one after another, so that:
- a first light pulse (1) of the pair passes through the second-order nonlinear medium (3), and at this time the phase-matching conditions are not satisfied in the second-order nonlinear medium and there is no nonlinear interaction,
- the first light pulse (1) of the pair passed though said second-order nonlinear medium (3) is returned back by an optical scheme as returned back light pulse (2) and directed to the same input side of the nonlinear medium (3),
- the returned back light pulse (2) of the pair overlaps with a second light pulse (1') of the same pair, which propagates through the second-order nonlinear medium (3) for the first time, satisfying the phase-matching condition between these pulses,
- by satisfying the phase-matching condition between the returned back light pulse (2) and the second pulse (1') of the same pair passing for the first time through the second-order nonlinear medium (3), an efficient nonlinear interaction takes place, and the light pulses (1', 2) of each pair are combined into a sum-frequency light pulse, wherein a time interval between light pulses in the pair is predetermined and is equal to a time needed for the first light pulse (1) of the pair to pass through the second-order medium (3), starting at an input side, to be returned back and directed to the same input side of the second-order nonlinear medium (3) as returned back light pulse (2).

2. Method for sum frequency generation of light pulses where light pulses are directed into a second-order nonlinear medium (3) and satisfy the phase-matching conditions, the sum-frequency generation takes place by directing light pulses to an input side of the second-order medium (3), so that:
- a first part (1) of the light pulse passes through the second-order nonlinear medium (3), and at this time the phase-matching conditions in the second-order nonlinear medium (3) are not satisfied and there is no nonlinear interaction,
- the first part (1) of the light pulse, which passed though said second-order nonlinear medium (3), is returned back by an optical scheme as returned back part (2) of the light pulse and is directed to the same input side of the nonlinear medium (3),
- the returned back part (2) of the light pulse overlaps with a second part (1') of the same light pulse, which propagates through the second-order nonlinear medium (3) for the first time, satisfying the phase-matching condition,
- by satisfying the phase matching condition inside the second-order nonlinear medium (3) between said pulse overlapping parts (1', 2) an efficient nonlinear interaction takes place and the overlapping light pulse parts are combined into a sum-frequency light pulse (4), wherein a duration of each light pulse is longer than a time T needed for the first part of the light pulse to pass through the second-order nonlinear medium (3) starting at its input side, to be returned back and directed to the same input side of the second-order nonlinear medium (3) as returned back part (2) of the light pulse.

3. Method for sum-frequency generation of light pulses according to claim 1 or 2, **characterized in that** every returned light pulse (2) or returned first part (2) of a light pulse propagating through the second-order nonlinear medium (3) for the second time intersects at a predetermined angle with the second light pulse (1') of the same pair or, respectively, with the second part (1') of the same light pulse, propagating for the first time through the second-order nonlinear medium (3), where the angle of intersection is predetermined to satisfy the phase-matching conditions for the efficient non-collinear nonlinear interaction between the light pulses or, respectively, parts of light pulses overlapping in the second-order nonlinear medium (3).

4. Method for sum-frequency generation of light pulses according to claim 1 or 2 **characterized in that** every returned back light pulse (2) or part (2) of the light pulse propagating through the second-order nonlinear medium (3) for the second time, overlaps collinearly with the second light pulse (1) of the pair or respectively with the second part (1') of the light pulse, propagating for the first time through the second-order nonlinear medium (3), where the overlapping light pulses or parts of light pulse respectively are perpendicularly polarized to satisfy the collinear nonlinear interaction phase-matching conditions between overlapping light pulses or parts of light pulse and to combine to sum-frequency pulses in time.

5. Device for sum-frequency generation of light pulses, comprising a second-order nonlinear medium (3) and an optical scheme, configured to direct light pulses to an input side of the said second-order nonlinear medium (3) and to direct sum-frequency light pulses out from an output side of the second-order nonlinear medium (3), wherein the optical scheme comprises a returning optical path, configured to optically connect the input and output sides of the nonlinear medium (3) and to return back a first light pulse (1) of a pair, which passed for the first time through said second-order nonlinear medium (3) and to direct the returned back light pulse (2) to the input side of the second-order nonlinear medium (3), so that the returned back light pulse (2) overlaps in the second-order nonlinear medium (3) with a second light pulse (1') of the same pair, and is provided with a means for satisfying the phase-matching conditions between the overlapping light pulses (1' and 2), wherein a time interval between light pulses (1,1') in the pair is predetermined and is equal to a time T, needed for the first light pulse (1) of the pair to pass through the second-order medium (3), starting at its input side, to be returned back and directed to the same input side of the second-order nonlinear medium (3) as returned back light pulse (2).

6. Device for sum-frequency generation of light pulses, comprising a second-order nonlinear medium (3) and an optical scheme, configured to direct light pulses to an input side of the second-order nonlinear medium (3) and to direct sum-frequency light pulses out from an output side of the second-order nonlinear medium (3), wherein the optical scheme comprises a returning optical path, configured to optically connect the input and output sides of the nonlinear medium (3) and to return back a first part (1) of the single light pulse, which passed for the first time through said second-order nonlinear medium (3) and to direct the returned back part (2) of the light pulse to the input side of the second-order nonlinear medium (3), so that the returned back part (2) of the light pulse overlaps in the second-order nonlinear medium (3) with a second part (1') of the same light pulse, and is provided with a means for satisfying the phase-matching conditions between the overlapping parts (1' and 2) of the same light pulse, wherein a duration of each light pulse is longer than a time T needed for the first part (1) of the light pulse to pass through the second-order nonlinear medium (3) starting at its input side, to be returned back and directed to the same input side of the second-order nonlinear medium (3) as returned back part (2) of the light pulse.

7. Device for sum-frequency generation of light pulses according to claim 5 or 6 **characterized in that** the returning optical path comprises reflection mirrors (5,5') configured to propagate the returning light pulse without intersecting the said second-order nonlinear medium (3), to the input side of the said second-order nonlinear medium (3), the returned back light pulse (2) or part (2) of the light pulse intersects at a predetermined angle in the second-order nonlinear medium (3) with the second light pulse (1') of the same pair or respectively with the second part (1') of the same light pulse, where the angle of intersection is predetermined to satisfy the phase-matching conditions for the non-collinear nonlinear interaction between the light pulses (1', 2) or respectively parts (1', 2) of light pulses overlapping in the second-order nonlinear medium (3).

8. Device for sum-frequency generation of light pulses according to claim 5 or 6 **characterized in that** the returning optical path comprises a polarization beam splitter (7) configured to direct the light pulses or parts of the light pulse to the input side of the second-order nonlinear medium (3), a dichroic mirror (8), placed in front of the output side of the nonlinear medium (3), configured to return back the first light pulse (1) of the pair or first part (1) of the light pulse, which passed through the second-order nonlinear medium (3) for the first time, to the returning optical path, and to direct combined light pulses (4) out from the second-order nonlinear medium (3), a first and a second reflection mirror (5, 5'), an element (6) for rotation of polarization, configured to rotate a polarization by 90 degrees of the returned first light pulse (2) or returned first part (2) of the light pulse in respect of the first time propagating through the second-order nonlinear medium (3), the second light pulse (1') of the same pair or, correspondingly, the second part (1') of the same pulse, all said elements in the returning optical path are configured that the propagating light pulse (1) or part (1) of the light pulse after passing for the first time through the second-order nonlinear medium (3), is directed from the dichroic mirror (8) to the first reflection mirror (5), reflected by which further propagates through the element (6) for rotation of polarization and reflects from the mirror (5') to the polarization beam splitter (7), which is configured to direct the light pulse (1) or part (1) of the light pulse to the input side of the said second-order nonlinear medium (3), where the returned light pulse (2) or part (2) of the light pulse overlaps with the second light pulse (1') of the same pair or respectively second part (1') of the same light pulse propagating for the first time trough the said second-order nonlinear medium (3).

9. Device for sum-frequency generation of light pulses according to claim 5 or 6, **characterized in that** the returning optical path comprises reflection mirrors (5, 5') and an element (6,6') for rotation of polarization, a polarization beam splitter (7), which is placed in front of the input side of the second-order nonlinear medium (3) and configured to combine perpendicularly polarized light pulses propagating for the first and second time through the second-order nonlinear medium (3), the dichroic mirror (8) which is placed in front of the output side of the second-order nonlinear medium (3) is configured to separate the combined in time sum-frequency light pulses (4) from the nonlinear medium (3), all mentioned optical elements are configured in the return path for light pulses or path or light pulse, so that after being reflected from mirrors (5,5') and rotation of polarization at the element (6,6') the returning light pulse propagates through the second-order nonlinear medium (3) by the same path as the first time propagating light pulse (1) or part (1) of the light pulse but in the opposite direction, then after being reflected from the mirror (5) and polarization beam splitter (7), it is directed to the input side of the nonlinear medium (3), so that in the nonlinear medium (3) returned back the light pulse (2) or part (2) of the light pulse overlap with the second light pulse (1') of the same pair or with the second part (1') of the same light pulse , respectively.

10. Device for sum-frequency generation of light pulses according to claim 5 or 6, **characterized in that** the returning optical path comprises an optical fiber (9) which ends are connected with first and second collimators (10) and (10') respectively, and configured so that the first light pulse (1) of the pair or, respectively, the first part (1) of the light pulse, after passing for the first time through the second-order nonlinear medium (3), is directed into the optical fiber (9) through the first collimator (10) and after passing the optical fiber (9) is returned via the second collimator (10') to the nonlinear medium (3) as light pulse (2) or part (2) of the light pulse, where the length of optical fiber (9) is selected to ensure the overlapping and intersecting at a predetermined angle of the second light pulse (1') of the pair or of the second part (1') of the pulse, propagating for the first time through the second-order nonlinear medium (3), with the returned light pulse (2) or part (2) of the light pulse, where the said angle of intersection is predetermined to satisfy the phase-matching conditions for the non-collinear nonlinear interaction in the second-order nonlinear medium (3) between overlapping light pulses or parts of the same light pulse respectively.

11. Device for sum-frequency generation of light pulses according to claim 5 or 6, **characterized in that** the second-order nonlinear medium (3) has a trapezium shape, and the returning optical path comprises a first mirror (11) and a second mirror (12), formed on input and output sides of the trapezium shaped second-order nonlinear medium (3) configured so that the first pulse (1) of the pair or the first part (1) of the pulse, which passed through the nonlinear medium (3) for the first time is reflected back from the first mirror (11), formed on the output side of the trapezium shaped nonlinear medium (3), and is returned back through the trapezium shaped nonlinear medium (3) and is reflected from the second mirror (12), formed on the input side of the trapezium shaped nonlinear medium (3) as the returned first light pulse (2) of the pair or returned first part (2) of the pulse propagating for the second time to intersect at a predetermined angle in the second-order nonlinear medium (3) with the second pulse (1') of the same pair or the second part (1') of the same pulse, respectively, propagating for the first time through the nonlinear medium (3), where the angle of intersection is predetermined to satisfy the phase-matching conditions for non-collinear nonlinear interaction in the second-order nonlinear medium (3) between overlapping light pulses or parts of the same light pulse, respectively.

12. Device for sum-frequency generation of light pulses according to any one of claims 5-11, **characterized in that** the second-order nonlinear medium (3) is a birefringent nonlinear crystal conventionally used for second-harmonic and sum-frequency generation and is selected from the nonlinear crystals such as LBO, BBO, LN, KTP, KDP), periodically poled nonlinear crystals, such as PPLN, PPLT, PPKTP, nonlinear crystal with wave-guide structure in it or other device which has second-order nonlinearity not equal to zero (*χ*⁽²⁾≠0).

## Patentansprüche

1. Verfahren zur Generierung einer Summenfrequenz von Lichtimpulsen, wobei Lichtimpulse in ein nichtlineares Medium (3) zweiter Ordnung gerichtet werden und die Phasenanpassungsbedingungen erfüllen. die Generierung einer Summenfrequenz erfolgt, indem Lichtimpulse paarweise nacheinander auf eine Eingangsseite des nichtlinearen Mediums (3) zweiter Ordnung gerichtet werden, so dass:
- ein erster Lichtimpuls (1) des Paares das nichtlineare Medium zweiter Ordnung (3) durchläuft, und zu diesem Zeitpunkt die Phasenanpassungsbedingungen im nichtlinearen Medium zweiter Ordnung (3) nicht erfüllt, außerdem gibt es keine nichtlineare Wechselwirkung,
- der erste Lichtimpuls (1) des Paares, der durch das nichtlineare Medium zweiter Ordnung (3) geleitet wird, wird durch ein optisches Schema als zurückgegebener Lichtimpuls (2) zurückgeführt und auf dieselbe Eingangsseite des nichtlinearen Mediums (3) gerichtet,
- der zurückgesendete erste Lichtimpuls (2) des Paares überlappt mit einem zweiten Lichtimpuls (1') desselben Paares, der sich zum ersten Mal durch das nichtlineare Medium zweiter Ordnung (3) ausbreitet und die Phasenanpassungsbedingungen zwischen diesen Impulsen erfüllt,
- durch Erfüllen der Phasenanpassungsbedingung zwischen dem zurückgegebenen Lichtimpuls (2) und dem zweiten Impuls (1') desselben Paares, der zum ersten Mal durch das nichtlineare Medium zweiter Ordnung (3) läuft, eine effiziente nichtlineare Wechselwirkung stattfindet und die Lichtimpulse (1', 2) jedes Paares werden zu einem Summenfrequenz-Lichtimpuls kombiniert werden, wobei ein Zeitintervall zwischen Lichtimpulsen in dem Paar vorbestimmt ist und gleich einer Zeit T ist, die der erste Lichtimpuls (1) des Paares benötigt, um durch das nichtlineare Medium zweiter Ordnung (3) zu durchlaufen, beginnend an einer Eingangsseite, um zurückgeführt zu werden und auf dieselbe Eingangsseite des nichtlinearen Mediums zweiter Ordnung (3) als zurückgeführter Lichtimpuls (2) gerichtet zu werden.

2. Verfahren zur Generierung einer Summenfrequenz von Lichtimpulsen, bei dem Lichtimpulse in ein nichtlineares Medium zweiter Ordnung (3) geleitet werden und die Phasenanpassungsbedingungen erfüllen, erfolgt die Generierung einer Summenfrequenz durch das Richten von Lichtimpulsen auf eine Eingangsseite des nichtlinearen Mediums zweiter Ordnung (3), so dass:
- ein erster Teil (1) des Lichtimpulses, der das nichtlineare Medium zweiter Ordnung (3) durchläuft und zu diesem Zeitpunkt die Phasenanpassungsbedingungen in dem nichtlinearen Medium zweiter Ordnung (3) nicht erfüllt und keine nichtlineare Wechselwirkung vorliegt,
- der erste Teil (1) des Lichtimpulses, der das nichtlineare Medium zweiter Ordnung (3) durchlaufen hat, wird durch ein optisches Schema als zurückgeführter Teil (2) des Lichtimpulses zurückgeführt und auf denselben Eingang gerichtet Seite des nichtlinearen Mediums (3) gerichtet,
- der zurückgegebene Teil (2) des Lichtimpulses überlappt mit einem zweiten Teil (1') desselben Lichtimpulses, der sich zum ersten Mal durch das nichtlineare Medium zweiter Ordnung (3) ausbreitet, wobei die Phasenanpassungsbedingung erfüllt wird.
- durch Erfüllen der Phasenanpassungsbedingung innerhalb des nichtlinearen Mediums zweiter Ordnung (3) zwischen den überlappenden Impulsteilen (1', 2) findet eine effiziente nichtlineare Wechselwirkung statt und die überlappenden Lichtimpulsteile werden zu einem Summenfrequenz-Lichtimpuls (4) kombiniert, wobei eine Dauer jedes Lichtimpulses länger ist als eine Zeit T, die benötigt wird, damit der erste Teil des Lichtimpulses das nichtlineare Medium zweiter Ordnung (3) durchläuft, beginnend an seiner Eingangsseite, um zurückgeführt zu werden und auf dieselbe Eingangsseite des nichtlinearen Mediums zweiter Ordnung (3) als zurückgegebener Teil (2) des Lichtimpulses gerichtet zu werden.

3. Verfahren zur Summenfrequenz-Erzeugung von Lichtimpulsen nach Anspruch 1 oder 2, **dadurch gekennzeichnet, dass** jeder zurückgegebene Lichtimpuls (2) bzw. zurückgegebene erste Teil (2) des Lichtimpulses des sich zum zweiten Mal durch das nichtlineare Medium (3) zweiter Ordnung ausbreitenden Lichtimpulses sich unter einem vorgegebenen Winkel mit dem zweiten Lichtimpuls (1') des Paares bzw, mit dem zweiten Teil (1') desselben Lichtimpulses, der sich zum ersten Mal durch das nichtlineare Medium (3) zweiter Ordnung ausbreitet, wobei der Schnittwinkel vorgegeben ist, um die Phasenanpassungsbedingungen für die effiziente nichtkollineare nichtlineare Wechselwirkung zwischen den Lichtimpulsen bzw. Teilen von Lichtimpulsen zu erfüllen, die sich im nichtlinearen Medium zweiter Ordnung (3) überlappen.

4. Verfahren zur Summenfrequenz-Erzeugung von Lichtimpulsen nach Anspruch 1 oder 2, **dadurch gekennzeichnet, dass** sich jeder zurückgesendete Lichtimpuls (2) oder Teil (2) des sich zum zweiten Mal durch das nichtlineare Medium zweiter Ordnung (3) ausbreitenden Lichtimpulses mit dem zweiten Lichtimpuls (1') des Paares bzw. mit dem zweiten Teil (1') des Lichtimpulses kollinear überlappt, die sich zum ersten Mal durch das nichtlineare Medium (3) zweiter Ordnung ausbreiten, wobei überlappende Lichtimpulse oder Teile von Lichtimpulsen jeweils senkrecht polarisiert sind, um die kollinearen nichtlinearen Wechselwirkungsphasenanpassungsbedingungen zwischen überlappenden Lichtimpulsen oder Teilen von Lichtimpulsen zu erfüllen und sich zeitlich zu den Summenfrequenzimpulsen zu verbinden.

5. Vorrichtung zur Summenfrequenz-Erzeugung von Lichtimpulsen, umfassend ein nichtlineares Medium zweiter Ordnung (3) und ein optisches Schema, das so konfiguriert ist, dass es Lichtimpulse zu einer Eingangsseite des nichtlinearen Mediums (3) zweiter Ordnung leitet und Summenfrequenz-Lichtimpulse aus einer Ausgangsseite des nichtlinearen Mediums (3) zweiter Ordnung herausleitet, wobei das optische Schema einen zurückkehrenden optischen Pfad umfasst, der so konfiguriert ist, dass er die Eingangs- und Ausgangsseite des nichtlinearen Mediums (3) optisch verbindet und einen ersten Lichtimpuls (1) eines Paares, der zum ersten Mal durch das nichtlineare Medium (3) zweiter Ordnung gelaufen ist, zurückführt und den zurückgeführten Lichtimpuls (2) auf die Eingangsseite des nichtlinearen Mediums (3) zweiter Ordnung richtet, so dass sich der zurückgegebene Gegenlichtimpuls (2) im nichtlinearen Medium zweiter Ordnung (3) mit einem zweiten Lichtimpuls (1') desselben Paares überlappt und mit einem Mittel zum Erfüllen der Phasenanpassungsbedingungen zwischen den überlappenden Lichtimpulsen (1' und 2), wobei ein Zeitintervall zwischen den Lichtimpulsen (1, 1') in dem Paar ist vorbestimmt und entspricht einer Zeit T, die benötigt wird, damit der erste Lichtimpuls (1) des Paares beginnend an seinem Eingang durch das nichtlineare Medium zweiter Ordnung (3) läuft, die zurückgeführt und auf dieselbe Eingangsseite des nichtlinearen Mediums zweiter Ordnung (3) gerichtet werden soll wie der zurückgegebene Lichtimpuls (2).

6. Vorrichtung zur Summenfrequenz-Erzeugung von Lichtimpulsen, die ein nichtlineares Medium zweiter Ordnung (3) und ein optisches Schema umfasst, konfiguriert, um Lichtimpulse auf eine Eingangsseite des nichtlinearen Mediums zweiter Ordnung (3) zu leiten und die Summenfrequenz-Lichtimpulse von einer Ausgangsseite des nichtlinearen Mediums (3) zweiter Ordnung nach außen leitet, wobei das optische Schema einen zurückkehrenden optischen Pfad umfasst, der konfiguriert ist, um die Eingangs- und Ausgangsseite des nichtlinearen Mediums (3) optisch zu verbinden und zurückzukehren den ersten Teil (1) des einzelnen Lichtimpulses, der zum ersten Mal durch das nichtlineare Medium zweiter Ordnung (3) hindurchgegangen ist, zurück und den zurückgegebenen Teil (2) des Lichtimpulses auf die Eingangsseite des zweiten zu lenken nichtlineares Medium zweiter Ordnung (3), so dass sich der zurückgegebene Rückenteil (2) des Lichtimpulses im nichtlinearen Medium zweiter Ordnung (3) mit einem zweiten Teil (1') desselben Lichtimpulses überlappt und mit einem Mittel zum Erfüllen der Phasenanpassungsbedingungen zwischen den überlappenden Teilen (1' und 2) desselben Lichtimpulses versehen ist, wobei eine Dauer jedes Lichtimpulses länger ist als eine Zeit T, die benötigt wird, damit der erste Teil (1) des Lichtimpulses das nichtlineare Medium zweiter Ordnung (3) beginnend an seiner Eingangsseite durchläuft zurückgeführt und auf dieselbe Eingangsseite des nichtlinearen Mediums zweiter Ordnung (3) gerichtet werden wie der zurückgesendete Teil (2) des Lichtimpulses.

7. Vorrichtung zur Summenfrequenz-Erzeugung von Lichtimpulsen nach Anspruch 5 oder 6, **dadurch gekennzeichnet, dass** der rückkehrende optische Pfad Reflexionsspiegeln (5, 5') umfasst, die konfiguriert sind, um den zurückkehrenden Lichtimpuls auszubreiten, ohne das nichtlineare Medium zweiter Ordnung (3) zu schneiden, auf der Eingangsseite des nichtlinearen Mediums zweiter Ordnung (3) schneidet sich der zurückgegebene Gegenlichtimpuls (2) oder Teil (2) des Lichtimpulses in einem vorbestimmten Winkel in dem nichtlinearen Medium zweiter Ordnung (3)) mit dem zweiten Lichtimpuls (1') desselben Paares bzw. mit dem zweiten Teil (1') desselben Lichtimpulses, wobei der Schnittwinkel vorgegeben ist, um die Phasenanpassungsbedingungen für das nicht kollineare nichtlineare Wechselwirkung zu erfüllen zwischen den Lichtimpulsen (1', 2) bzw. Teilen (1', 2) von Lichtimpulsen, die sich im nichtlinearen Medium zweiter Ordnung (3) überlappen.

8. Vorrichtung zur Summenfrequenzerzeugung von Lichtimpulsen nach Anspruch 5 oder 6, **dadurch gekennzeichnet, dass** der zurückkehrende optische Pfad einen Polarisationsstrahlteiler (7) umfasst, der so konfiguriert ist, dass er die Lichtimpulse oder Teile von Lichtimpulsen zur Eingangsseite des nichtlinearen Mediums zweiter Ordnung (3) leitet, ein dichroitischer Spiegel (8), der vor der Ausgangsseite des nichtlineare Medium (3) angeordnet ist und so konfiguriert ist, dass er den ersten Lichtimpuls (1) des Paares oder den ersten Teil (1) des Lichtimpulses, der das nichtlineare Medium zweiter Ordnung (3) zum ersten Mal durchlaufen hat, zurückleitet zu dem zurückkehrenden optischen Pfad, und um kombinierte Lichtimpulse (4) aus dem nichtlinearen Medium zweiter Ordnung (3) herauszuleiten, die erster und zweiter Reflexionsspiegels (5, 5'), ein Element (6) zur Drehung der Polarisation, konfiguriert, um eine Polarisation um 90 Grad des zurückgegebenen ersten Lichtimpulses (2) des Paares oder des zurückgegebenen ersten Teils des Lichtimpulses zu drehen (2) in Bezug auf die erste Ausbreitung durch das nichtlineare Medium zweiter Ordnung (3) der zweite Lichtimpuls (1') desselben Paares oder entsprechend der zweite Teil (1') desselben Impulses sind alle genannten Elemente im zurückkehrenden Lichtweg so konfiguriert, dass der sich ausbreitende Lichtimpuls (1) oder ein Teil (1) des Lichtimpulses wird nach dem ersten Durchgang durch das nichtlineare Medium zweiter Ordnung (3) vom dichroitischen Spiegel (8) zum ersten Reflexionsspiegel (5) geleitet wird, sich weiter durch das Element (6) zur Drehung der Polarisation ausbreitet und reflektiert von dem Spiegel (5') zum Polarisationsstrahlteiler (7)reflektiert wird, der konfiguriert ist, dass er den Lichtimpuls (1) oder einen Teil (1) des Lichtimpulses zur Eingangsseite des besagten nichtlinearen Mediums (3) zweiter Ordnung lenkt, wo der zurückgegebene Lichtimpuls (2) oder ein Teil des Lichtimpulses (2) mit dem zweiten Lichtimpuls (1') desselben Paares bzw. des zweiten Teils überlappt (1') desselben Lichtimpulses, der sich zum ersten Mal durch das nichtlineare Medium zweiter Ordnung (3) ausbreitet.

9. Vorrichtung zur Summenfrequenz-Erzeugung von Lichtimpulsen nach Anspruch 5 oder 6, **dadurch gekennzeichnet, dass** der rücklaufende optische Pfad Reflexionsspiegel (5, 5') und ein Element (6, 6') zur Drehung der Polarisation, einen Polarisationsstrahlteiler (7), umfasst, der vor der Eingangsseite des nichtlinearen Mediums zweiter Ordnung (3) angeordnet und konfiguriert ist, um senkrecht polarisierte Lichtimpulse zu kombinieren, die sich zum ersten und zweiten Mal durch das nichtlineare Medium zweiter Ordnung (3) ausbreiten. Einen dichroitischen Spiegel (8), der vor der Ausgangsseite des nichtlinearen Mediums zweiter Ordnung (3) angeordnet ist und so konfiguriert ist, dass er die kombinierten zeitlich summierten Lichtfrequenzimpulse (4) vom nichtlinearen Medium (3) trennt, alle genannten optischen Elemente sind im Rückweg für Lichtimpuls oder Lichtimpulsweg so konfiguriert, dass nach Reflexion vom Spiegeln (5, 5') und Drehung der Polarisation am Element (6, 6'), der zurückkehrende Lichtimpuls sich durch das nichtlineares Medium zweite Ordnung (3) aus auf demselben Weg wie der erste sich ausbreitende Lichtimpuls (1) oder Teil (1) des Lichtimpulses ausbreitet, jedoch in entgegengesetzter Richtung, dann nach Reflexion von einem anderen Spiegel (5') und einem Polarisationsstrahlteiler (7) es ist auf die Eingangsseite des nichtlinearen Mediums (3) gerichtet, so dass in dem zurückgegebenen nichtlinearen Medium (3) der Lichtimpuls (2) oder ein Teil (2) des Lichtimpulses mit dem zweiten Lichtimpuls (1') (1') desselben Paares bzw. mit dem zweiten Teil (1') desselben Lichtimpulses überlappt.

10. Vorrichtung zur Summenfrequenz-Erzeugung von Lichtimpulsen nach Anspruch 5 oder 6, **dadurch gekennzeichnet, dass** der zurückkehrende optische Weg eine optische Faser (9) umfasst, deren Enden mit dem ersten und dem zweiten Kollimator (10) und (10'), bzw. verbunden sind, so konfiguriert ist, dass der erste Lichtimpuls (1) des Paares bzw. der erste Teil (1) des Lichtimpulses nach dem ersten Durchlaufen des nichtlinearen Mediums zweiter Ordnung (3) durch den ersten Kollimator (10) in die optische Faser (9) gerichtet ist und nach dem Passieren der optischen Faser (9) über den zweiten Kollimator (10') als Lichtimpuls (2) oder Teil (2) des Lichtimpulses auf das nichtlineare Medium (3) zurückgeführt wird, wobei die Länge der optischen Faser (9) ausgewählt wird, um sicherzustellen, dass sich der zweite Lichtimpuls (1') des Paares oder des zweiten Teils (1') der sich zum ersten Mal durch das nichtlineare Medium zweiter Ordnung (3) ausbreitet in einem vorgegebenen Winkel überlappt und schneidet mit dem zurückgegebenen Lichtimpuls (2) oder Teil (2) des Lichtimpulses, wobei der Schnittwinkel vorgegeben ist, um die Phasenanpassungsbedingungen jeweils für die nicht kollineare nichtlineare Wechselwirkung in dem nichtlinearen Medium zweiter Ordnung (3) zwischen überlappenden Lichtimpulsen oder Teilen von zu erfüllen

11. Vorrichtung zur Summenfrequenz-Erzeugung von Lichtimpulsen nach Anspruch 5 oder 6, **gekennzeichnet dadurch, dass** das nichtlineare Medium zweiter Ordnung (3) eine Trapezform aufweist und der zurückkehrende optische Pfad einen ersten Spiegel (11) und einen zweiten umfasst Spiegel (12), der auf der Eingangs- und Ausgangsseite des trapezförmigen nichtlinearen Mediums zweiter Ordnung (3) ausgebildet ist, so konfiguriert, dass der erste Impuls (1) des Paares oder der erste Teil (1) des Impulses durchläuft das nichtlineare Medium (3) wird zum ersten Mal vom ersten Spiegel (11) reflektiert, der auf der Ausgangsseite des trapezförmigen nichtlinearen Mediums (3) ausgebildet ist, und wird durch das trapezförmige nichtlineare Medium (3) zurückgeführt vom zweiten Spiegel (12) reflektiert, der auf der Eingangsseite des trapezförmigen nichtlinearen Mediums (3) als der zurückgegebene erste Lichtimpuls (2) des Paares oder der zurückgegebene erste Teil (2) des Impulses gebildet wird, der sich zum zweiten Mal ausbreitet in einem vorgegebenen Winkel im nichtlinearen Medium zweiter Ordnung (3) mit der zweite Impuls (1') desselben Paares bzw. der zweite Teil (1') desselben Impulses breitet sich zum ersten Mal durch das nichtlineare Medium (3) aus, wobei der Schnittwinkel vorgegeben ist, um die Phasenanpassungsbedingungen für nichtkollineare nichtlineare Wechselwirkung im nichtlinearen Medium zweiter Ordnung (3) zwischen überlappenden Lichtimpulsen bzw. Teilen desselben Lichtimpulses zu erfüllen.

12. Vorrichtung zur Summenfrequenz-Erzeugung von Lichtimpulsen nach einem der Ansprüche 5 bis 11, **gekennzeichnet dadurch, dass** das nichtlineare Medium zweiter Ordnung (3) ein doppelbrechender nichtlinearer Kristall ist, der herkömmlicherweise zur Erzeugung der zweiten Harmonischen oder Summenfrequenzen verwendet wird, und ausgewählt ist aus nichtlinearen Kristallen wie LBO, BBO, LN, KTP, KDP, periodisch gepolten nichtlinearen Kristallen wie PPLN, PPLT, PPKTP, nichtlinearen Kristallen mit Wellenleiter oder einer anderen Vorrichtung, die eine Nichtlinearität zweiter Ordnung ungleich bis Null (*χ*⁽²⁾ ≠ 0) besitzt.

## Revendications

1. Procédé de génération d'impulsions lumineuses à fréquence somme, où les impulsions lumineuses sont dirigées dans un milieu non linéaire du second ordre (3) et satisfont aux conditions d'adaptation de phase, la génération de fréquence somme a lieu en dirigeant les impulsions lumineuses vers un côté d'entrée du milieu non linéaire du second ordre (3) par paires séquentiellement, l'une après l'autre, de sorte que :
- une première impulsion lumineuse (1) de la paire traverse le milieu non linéaire du second ordre (3) et, à ce moment, les conditions d'adaptation de phase ne sont pas satisfaites dans le milieu non linéaire du second ordre (3) et il n'y a pas interaction non linéaire,
- la première impulsion lumineuse (1) de la paire passée à travers le milieu non linéaire du second ordre (3) est renvoyée par un schéma optique en tant qu'impulsion de rétro-éclairage renvoyée (2) et dirigée vers le même côté d'entrée du milieu non linéaire du second ordre (3),
- le retour de la première impulsion lumineuse (2) de la paire chevauche une seconde impulsion lumineuse (1 ') de la même paire, qui se propage à travers le milieu non linéaire du second ordre (3) pour la première fois, satisfaisant la phase-conditions d'adaptation entre ces impulsions
- en satisfaisant la condition d'adaptation de phase entre l'impulsion de rétro-éclairage renvoyée (2) et la seconde impulsion (1') de la même paire passant pour la première fois à travers le milieu non linéaire du second ordre (3), une interaction non linéaire efficace a lieu, et les impulsions lumineuses (1', 2) de chaque paire sont combinées en une impulsion lumineuse à fréquence somme, où un intervalle de temps entre les impulsions lumineuses de la paire est prédéterminé et est égal à un temps T nécessaire pour la première impulsion lumineuse (1) de la paire pour passer à travers le support non linéaire du second ordre (3), en commençant par un côté d'entrée, pour être renvoyée et dirigée vers le même côté d'entrée du support non linéaire du second ordre (3) comme rétro-éclairage pouls (2).

2. Procédé de génération d'impulsions lumineuses à fréquence somme, où les impulsions lumineuses sont dirigées dans un milieu non linéaire du second ordre (3) et satisfont aux conditions d'adaptation de phase, la génération de fréquence somme a lieu en dirigeant les impulsions lumineuses vers un côté d'entrée du milieu non linéaire du second ordre (3) de sorte que
- une première partie (1) de l'impulsion lumineuse traverse le milieu non linéaire du second ordre (3) et, à ce moment, les conditions d'adaptation de phase dans le milieu non linéaire du second ordre (3) ne sont pas satisfaites et il n'y a pas interaction non linéaire,
- la première partie (1) de l'impulsion lumineuse, qui a traversé ledit milieu non linéaire du second ordre (3), est renvoyée par un schéma optique comme partie renvoyée (2) de l'impulsion lumineuse et est dirigée vers la même entrée côté du milieu non linéaire (3),
- la partie renvoyée (2) de l'impulsion lumineuse chevauche une deuxième partie (1') de la même impulsion lumineuse, qui se propage à travers le milieu non linéaire du second ordre (3) pour la première fois, satisfaisant la condition d'adaptation de phase,
- en satisfaisant la condition d'adaptation de phase à l'intérieur du milieu non linéaire de second ordre (3) entre lesdites parties chevauchantes d'impulsions (1', 2), une interaction non linéaire efficace a lieu, et les parties d'impulsions lumineuses chevauchantes sont combinées en une impulsion lumineuse à fréquence somme (4), où la durée de chaque impulsion lumineuse est plus longue qu'un temps T nécessaire pour que la première partie de l'impulsion lumineuse passe à travers le milieu non linéaire du second ordre (3) en commençant à son côté d'entrée pour être renvoyée et dirigée vers le même côté d'entrée du milieu non linéaire du second ordre (3) que la partie arrière renvoyée (2) de l'impulsion lumineuse.

3. Procédé de génération en fréquence somme d'impulsions lumineuses selon la revendication 1 ou 2, **caractérisé en ce que** chaque impulsion lumineuse renvoyée (2) ou la première partie renvoyée (2) de l'impulsion lumineuse se propageant à travers le milieu non linéaire du second ordre (3) pour la deuxième fois, coupe à un angle prédéterminé la deuxième impulsion lumineuse (1') de la paire ou, respectivement, la deuxième partie (1') de la même impulsion lumineuse, se propageant pour la première fois dans le second ordre milieu non linéaire (3), où l'angle d'intersection est prédéterminé pour satisfaire les conditions d'adaptation de phase pour l'interaction non linéaire non colinéaire efficace entre les impulsions lumineuses ou, respectivement, des parties d'impulsions lumineuses se chevauchant dans le milieu non linéaire du second ordre (3).

4. Procédé de génération en fréquence somme d'impulsions lumineuses selon la revendication 1 ou 2, **caractérisé en ce que** chaque impulsion de rétro-éclairage renvoyée (2) ou partie (2) de l'impulsion lumineuse se propageant à travers le milieu non linéaire du second ordre (3) pour la deuxième fois, chevauche colinéairement la deuxième impulsion lumineuse (1') de la paire ou, respectivement, la deuxième partie (1') de l'impulsion lumineuse, se propageant pour la première fois à travers le milieu non linéaire du deuxième ordre (3), où des impulsions lumineuses chevauchantes ou des parties d'impulsion lumineuse, respectivement, sont polarisées perpendiculairement pour satisfaire les conditions d'adaptation de phase d'interaction non linéaire colinéaire entre des impulsions lumineuses ou des parties d'impulsion lumineuse se chevauchant et pour se combiner aux impulsions de fréquence somme dans le temps.

5. Dispositif de génération en fréquence somme d'impulsions lumineuses, comprenant un milieu non linéaire du second ordre (3) et un schéma optique, configuré pour diriger les impulsions lumineuses vers un côté d'entrée dudit milieu non linéaire du second ordre (3) et pour diriger impulsions lumineuses à fréquence somme provenant d'un côté de sortie du milieu non linéaire du second ordre (3), dans lequel le schéma optique comprend un chemin optique de retour, configuré pour connecter optiquement les côtés d'entrée et de sortie du milieu non linéaire (3) et pour le retour d'une première impulsion lumineuse (1) d'une paire, qui est passée pour la première fois à travers ledit milieu non linéaire du deuxième ordre (3), et pour diriger l'impulsion de rétro-éclairage renvoyée (2) vers le côté d'entrée du milieu non linéaire du deuxième ordre (3), de sorte que l'impulsion de rétro-éclairage renvoyée (2) chevauche dans le milieu non linéaire du second ordre (3) une deuxième impulsion lumineuse (1 ') de la même paire, et est pourvue d'un moyen pour satisfaire les conditions d'adaptation de la phase entre les impulsions lumineuses se chevauchant (1 'et 2) dans lesquelles l'intervalle de temps entre les impulsions lumineuses (1, 1') de la paire est prédéterminé et égal à un temps T nécessaire pour que la première impulsion lumineuse (1) de la paire passe à travers le milieu non linéaire du second ordre (3) à partir de son côté d'entrée pour être renvoyée et dirigée vers le même côté d'entrée du milieu non linéaire du second ordre (3) que l'impulsion de rétro-éclairage (2).

6. Dispositif de génération de fréquence somme d'impulsions lumineuses, comprenant un milieu non linéaire du second ordre (3) et un schéma optique, configuré pour diriger les impulsions lumineuses vers un côté d'entrée du milieu non linéaire du second ordre (3) et pour diriger les impulsions lumineuses à fréquence somme provenant d'un côté de sortie du support non linéaire du second ordre (3), dans lequel le schéma optique comprend un chemin optique de retour configuré pour connecter optiquement les côtés d'entrée et de sortie du support non linéaire (3) et pour renvoyer la première partie (1) de l'impulsion lumineuse unique, qui est passée pour la première fois à travers ledit milieu non linéaire du second ordre (3), et pour diriger la partie renvoyée (2) de l'impulsion lumineuse vers le côté d'entrée du second ordre milieu non linéaire (3), de sorte que la partie arrière renvoyée (2) de l'impulsion lumineuse chevauche dans le milieu non linéaire du second ordre (3) une deuxième partie (1') de la même impulsion lumineuse, et est pourvue d'un moyen pour satisfaire les conditions d'adaptation de phase entre les parties superposées (1' et 2) de la même impulsion lumineuse, dans laquelle la durée de chaque impulsion lumineuse est plus longue que le temps T nécessaire pour que la première partie (1) de l'impulsion lumineuse passe à travers le milieu non linéaire du second ordre (3) à partir de son côté d'entrée, pour être renvoyé en arrière et dirigé vers le même côté d'entrée du milieu non linéaire du second ordre (3) que la partie renvoyée (2) de l'impulsion lumineuse.

7. Dispositif de génération en fréquence somme d'impulsions lumineuses selon la revendication 5 ou 6, **caractérisé en ce que** le chemin optique de retour comprend des miroirs de réflexion (5, 5') configurés pour propager l'impulsion lumineuse de retour sans croiser ledit milieu non linéaire du second ordre (3), du côté d'entrée du milieu non linéaire du second ordre (3), l'impulsion de rétro-éclairage renvoyée (2) ou une partie (2) de l'impulsion lumineuse croise à un angle prédéterminé dans le milieu non linéaire du second ordre (3) la deuxième impulsion lumineuse (1') de la même paire ou, respectivement, la deuxième partie (1') de la même impulsion lumineuse, où l'angle d'intersection est prédéterminé pour satisfaire les conditions d'adaptation de phase pour une non-interaction non linéaire colinéaire entre les impulsions lumineuses (1', 2) ou, respectivement, des parties (1', 2) d'impulsions lumineuses se chevauchant dans le milieu non linéaire du second ordre (3).

8. Dispositif de génération en fréquence somme d'impulsions lumineuses selon la revendication 5 ou 6, **caractérisé en ce que** le chemin optique de retour comprend un séparateur de faisceau de polarisation (7) configuré pour diriger les impulsions lumineuses ou parties d'impulsions lumineuses vers le côté entrée du milieu non linéaire du second ordre (3), un miroir dichroïque (8), placé devant le côté sortie du milieu non linéaire (3) configuré pour renvoyer la première impulsion lumineuse (1) de la paire ou de la première partie (1) de l'impulsion lumineuse, qui a traversé le milieu non linéaire du second ordre (3) pour la première fois vers le chemin optique de retour, et pour diriger les impulsions lumineuses combinées (4) hors du milieu non linéaire du second ordre (3), a des premier et second miroirs de réflexion (5, 5'), un élément (6) de rotation de polarisation, configuré pour faire tourner une polarisation à 90 degrés de la première impulsion lumineuse renvoyée (2) de la paire ou de la première partie renvoyée (2) de l'impulsion lumineuse par rapport au premier temps se propageant à travers le média non linéaire du second ordre (3), la deuxième impulsion lumineuse (1') de la même paire ou, en conséquence, la deuxième partie (1') de la même impulsion, tous lesdits éléments dans le chemin optique de retour sont configurés pour que l'impulsion lumineuse se propageant (1) ou une partie (1) de l'impulsion lumineuse après avoir traversé pour la première fois le milieu non linéaire du second ordre (3), est dirigée du miroir dichroïque (8) vers le premier miroir de réflexion (5), réfléchi par lequel se propage en outre à travers l'élément (6) pour la rotation de la polarisation et des reflets du miroir (5') vers le séparateur de faisceau de polarisation (7), qui est configuré pour diriger l'impulsion lumineuse (1) ou une partie (1) de l'impulsion lumineuse vers le côté d'entrée dudit milieu non linéaire du second ordre (3), où l'impulsion lumineuse renvoyée (2) ou une partie de l'impulsion lumineuse (2) chevauche la seconde impulsion lumineuse (1') de la même paire ou, respectivement, de la seconde partie (1') de la même impulsion lumineuse se propageant pour la première fois à travers le milieu non linéaire du second ordre (3).

9. Dispositif de génération en fréquence somme d'impulsions lumineuses selon la revendication 5 ou 6, **caractérisé en ce que** le chemin optique de retour comprend des miroirs de réflexion (5, 5') et un élément (6, 6') de rotation de polarisation, une polarisation séparateur de faisceau (7), qui est placé devant le côté d'entrée du milieu non linéaire du deuxième ordre (3) et configuré pour combiner des impulsions lumineuses polarisées perpendiculairement se propageant pour la première et la deuxième fois à travers le milieu non linéaire du deuxième ordre (3), le miroir dichroïque (8) qui est placé devant le côté sortie du milieu non linéaire du second ordre (3) et est configuré pour séparer les impulsions lumineuses combinées en temps somme-fréquence (4) du milieu non linéaire (3), tous les éléments optiques mentionnés sont configurés dans le trajet de retour pour une impulsion lumineuse ou un trajet d'impulsion lumineuse, de sorte qu'après avoir été réfléchi par des miroirs (5, 5') et une rotation de polarisation au niveau de l'élément (6, 6') l'impulsion lumineuse de retour se propage à travers le milieu non linéaire du second ordre (3) par le même trajet que la première impulsion lumineuse de propagation (1) ou une partie (1) de l'impulsion lumineuse, mais dans la direction opposée, puis après avoir été réfléchie par le miroir (5) et le séparateur de faisceau de polarisation (7), il est dirigé vers le côté d'entrée du milieu non linéaire (3), de sorte que dans le milieu non linéaire (3) renvoyé, l'impulsion lumineuse (2) ou une partie (2) de l'impulsion lumineuse chevauche la deuxième impulsion lumineuse (1') de la même paire ou avec la deuxième partie (1') de la même impulsion lumineuse, respectivement.

10. Dispositif de génération en fréquence somme d'impulsions lumineuses selon la revendication 5 ou 6, **caractérisé en ce que** le chemin optique de retour comprend une fibre optique (9), dont les extrémités sont reliées à des premier et second collimateurs (10) et (10'), respectivement, et configurées pour que la première impulsion lumineuse (1) de la paire ou, respectivement, la première partie (1) de l'impulsion lumineuse, après avoir traversé pour la première fois le milieu non linéaire du second ordre (3), soit dirigée dans la fibre optique (9) à travers le premier collimateur (10) et après passage de la fibre optique (9), est rétractée via le second collimateur (10 ') vers le milieu non linéaire (3) sous forme d'impulsion lumineuse (2) ou partie (2) de l'impulsion lumineuse, où la longueur de la fibre optique (9) est choisie pour assurer le chevauchement et l'intersection à un angle prédéterminé de la seconde impulsion lumineuse (1') de la paire ou de la seconde partie (1') de l'impulsion, se propageant pour la première fois à travers le milieu non linéaire du second ordre (3), avec l'impulsion lumineuse renvoyée (2) ou une partie (2) de l'impulsion lumineuse, où ledit angle d'intersection est prédéterminé pour satisfaire les conditions d'adaptation de phase pour l'interaction non linéaire non colinéaire dans le milieu non linéaire du second ordre (3) entre des impulsions lumineuses se chevauchant ou parties de la même impulsion lumineuse, respectivement.

11. Dispositif de génération en fréquence somme d'impulsions lumineuses selon la revendication 5 ou 6, **caractérisé en ce que** le milieu non linéaire du second ordre (3) est en forme de trapèze, et le chemin optique de retour comprend un premier miroir (11) et un second miroir (12), formé sur les côtés d'entrée et de sortie du milieu non linéaire du second ordre en forme de trapèze (3), configuré de telle sorte que la première impulsion (1) de la paire ou la première partie (1) de l'impulsion, qui est passée à travers le milieu non linéaire (3) pour la première fois est réfléchi par le premier miroir (11), formé sur le côté sortie du milieu non linéaire en forme de trapèze (3), est renvoyé à travers le milieu non linéaire en forme de trapèze (3) et est réfléchie par le second miroir (12), formé sur le côté d'entrée du milieu non linéaire en forme de trapèze (3) en tant que première impulsion lumineuse renvoyée (2) de la paire ou renvoyée la première partie (2) de l'impulsion se propageant pour la deuxième fois pour se couper à un angle prédéterminé dans le milieu non linéaire du second ordre (3) avec la deuxième impulsion (1') de la même paire ou la deuxième partie (1') de la même impulsion, respectivement, se propageant pour la première fois à travers le milieu non linéaire (3), où l'angle d'intersection est prédéterminé pour satisfaire les conditions d'adaptation de phase pour une interaction non linéaire non colinéaire dans le milieu non linéaire du second ordre (3) entre des impulsions lumineuses se chevauchant ou des parties de la même impulsion lumineuse, respectivement.

12. Dispositif de génération en fréquence somme d'impulsions lumineuses selon l'une quelconque des revendications 5 à 11, **caractérisé en ce que** le milieu non linéaire du second ordre (3) est un cristal non linéaire biréfringent classiquement utilisé pour la génération de seconde harmonique ou fréquence somme et est choisi parmi les cristaux non linéaires tels que LBO, BBO, LN, KTP, KDP, les cristaux non linéaires périodiquement à pôles tels que PPLN, PPLT, PPKTP, cristal non linéaire avec guide d'onde en lui ou autre dispositif qui possède une non-linéarité du second ordre différente à zéro (*χ*⁽²⁾ ≠0).
